# EUROPÄISCHE PATENTSCHRIFT

(11) **EP 0 611 361 B1**
(45) Veröffentlichungstag und Bekanntmachung des Hinweises auf die Patenterteilung: **26.04.1995**
(21) Anmeldenummer: 92923239.5
(22) Anmeldetag: 04.11.1992
(51) Int. Cl.: B65F 1/12, B66C 1/66, B65D 88/56

(54) **SAMMELBEHÄLTER FÜR WIEDERVERWERTBARE ABFALLSTOFFE**
COLLECTING CONTAINER FOR RECYCLABLE WASTE MATERIALS
CONTENEUR POUR DECHETS RECYCLABLES

(30) Priorität: 15.11.1991 DE 4137594
(43) Veröffentlichungstag der Anmeldung: 24.08.1994
(73) Patentinhaber: BERNHARD REILING GLAS-RECYCLING GMBH, D-33428 Harsewinkel (DE)
(72) Erfinder: REILING, Bernhard, D-33428 Harsewinkel (DE)
(74) Vertreter: Elbertzhagen, Otto
(86) Internationale Anmeldenummer: EP9202530
(87) Internationale Veröffentlichungsnummer: WO9310026

(56) Entgegenhaltungen:
- DE-A- 3 413 937
- DE-U- 8 805 173
- DE-U- 9 102 154

## Beschreibung

### TECHNISCHES GEBIET

Die Erfindung bezieht sich auf einen Sammelbehälter für wiederverwertbare Abfallstoffe der im Gattungsbegriff des Patentanspruchs 1 näher bezeichneten Art.

### STAND DER TECHNIK

Ein solcher Sammelbehälter ist aus der DE-A-34 13 937 bekannt, er ist darin als Klappbehälter bezeichnet, weil die beiden vorhandenen Teilbehälter in synchroner spiegelbildlicher Bewegung relativ zueinander auf- und zugeklappt werden können. Dazu sind bei dem bekannten Sammelbehälter die Oberseiten der beiden Teilbehälter unmittelbar miteinander gelenkig verbunden, und es liegen in der Schließlage die Offenseiten der Teilbehälter unmittelbar aneinander an. Dadurch bilden die Teilbehälter in der Schließlage einen einzigen, durchgehenden Stauraum, was für die Aufnahme von voneinander zu trennenden Abfallfraktionen nachteilig ist. Ein derartiger Sammelbehälter ist insbesondere für die Aufnahme von unterschiedlich gefärbten Glasfraktionen ungeeignet, beispielsweise ist damit eine Vorsortierung nach Weißglas und Buntglas nicht möglich.

Aus dem deutschen Gebrauchsmuster DE-U-88 05 173.0 ist ein ähnlicher Sammelbehälter bekannt, welcher eine Trennklappe aufweist, die im Behälterinnern zwischen den aneinandergrenzenden Offenseiten der beiden Teilbehälter angeordnet ist.

Beim synchronen Aufklappen der beiden Teilbehälter mit ihren Offenseiten voneinander weg hält die Trennklappe zunächst bis zu einem vorbestimmten Öffnungswinkel die Offenseite des einen Teilbehälters verschlossen, so daß zunächst der andere Teilbehälter entleert werden kann. Klappt man die beiden Teilbehälter weiter auseinander, gibt die Trennplatte die Offenseite des zweiten Teilbehälters frei, womit eine getrennte Entleerung der zwei Teilbehälter möglich ist. Der Nachteil dieser bekannten Anordnung liegt darin, daß sie nur für zwei unmittelbar gegeneinander klappbare Teilbehälter geeignet ist, für die Steuerung der Trennklappe eine komplizierte Mechanik erforderlich ist und die Reihenfolge der Entleerung der beiden Teilbehälter nicht beliebig vorgenommen werden kann.

Das deutsche Gebrauchsmuster DE-U-91 02 154.5 beschreibt eine Sammeleinrichtung für das getrennte Sammeln einzelner Stoffe, bei der mehrere Einzelbehälter an einem zentralen Aufnahmekörper angeordnet werden. Jeder einzelne Behälter kann für sich gehandhabt werden, und er muß zum Entleeren über eine oberseitige Klappe von dem zentralen Aufnahmekörper abgenommen werden.

### DIE ERFINDUNG

Der Erfindung liegt die Aufgabe zugrunde, einen Sammelbehälter der eingangs genannten Art zu schaffen, der zwei oder mehrere Teilbehälter haben kann, die unabhängig voneinander in beliebiger Reihenfolge je für sich entleert werden können.

Diese Aufgabe wird bei einem Sammelbehälter der gattungsbildenden Art nach der Erfindung durch die kennzeichnenden Merkmale des Patentanspruchs 1 gelöst.

Wesentlich für die Erfindung ist, daß die einzelnen Teilbehälter des Sammelbehälters unabhängig voneinander an dem zentralen Aufnahmekörper angelenkt sind, und deshalb durch Wegschwenken ihrer Offenseiten von dem Aufnahmekörper weg je für sich nach unten hin geöffnet werden können. Dabei hält der Aufnahmekörper mit seinen Wandungsabschnitten die übrigen Teilbehälter geschlossen, ohne daß die Gefahr einer unbeabsichtigten, selbsttätigen Öffnung besteht, weil beim Öffnen und Schließen des jeweiligen Teilbehälters die Relativbewegung immer nur zwischen diesem Teilbehälter und dem Aufnahmekörper, jedoch nicht zwischen den verschiedenen Teilbehältern stattfindet.

In vorteilhafter Ausgestaltung nach der Erfindung hat der Sammelbehälter insgesamt eine im wesentlichen kubische Gestalt und weist drei oder vier Teilbehälter auf, deren Trennfugen in der Schließlage in der Längs- und Quermittenebene des im wesentlichen kubischen Grundkörpers verlaufen. Hierbei ist dann der zentrale Aufnahmekörper an der Kreuzung der Trennfugen angeordnet, um eine günstige Schwerpunktlage zu erreichen. Die Achsen der Gelenke zwischen den Oberseiten der Teilbehälter und dem Aufnahmekörper können parallel und/oder diagonal zu den Trennfugen angeordnet sein, wobei im letzteren Falle die Gefahr eines Verklemmens der Teilbehälter gegeneinander vermindert ist und die Entleerungsöffnung an der Offenseite vergrößert werden kann, indem sich die Offenseite und damit die Entleerungsöffnung des betreffenden Teilbehälters über die innere Eckkante hinweg erstreckt.

Damit der Aufnahmekörper seine Trennfunktion erfüllen kann, ohne das Aufnahmevolumen der Teilbehälter wesentlich zu beeinträchtigen, ist es vorteilhaft, wenn er eine zentrale Säule hat, an der Wandungsflügel radial vorstehen, die zumindest einen Teil der die Offenseiten der Teilbehälter verschließenden Wandabschnitte bilden. Dabei kann sich die Säule des Aufnahmekörpers über die gesamte Höhe der Teilbehälter erstrecken, in deren Oberseiten und Unterseiten dann Negativkonturen zur dichten Umschließung der Säule eingeformt sind.

Um einerseits die Dimensionen des Aufnahmekörpers klein zu halten und zum anderen einen dichten Abschluß der Offenseiten bzw. der Entleerungsöffungen in der Schließlage der Teilbehälter zu erzielen, sind vorteilhaft an der Offenseite der Teilbehälter die Entleerungsöffnungen seitlich eingrenzende Wandteile angeordnet, die in der Schließlage von den Wandabschnitten bzw. den Wandungsflügeln des Aufnahmekörpers überlappt werden.

Um eine stabile Schließlage zu erreichen, verlegt man die Gelenke an den Oberseiten der Teilbehälter möglichst nahe zu dem zentralen Aufnahmekörper hin. Dazu ist es vorteilhaft, wenn der Aufnahmekörper eine am Oberende seiner Säule darüber radial vorstehende Kopfplatte hat, entlang deren Ränder die Gelenke für die Teilbehälter angeordnet sind. Über die Kopfplatte lassen sich gegebenenfalls auch noch bei fester Verbindung die radial vorstehenden Wandungsflügel des Aufnahmekörpers stabilisieren.

Für den Entleerungsvorgang wird der gesamte Sammelbehälter über den zentralen Aufnahmekörper durch das Hebezeug angehoben. Dazu sitzt zweckmäßig am Oberende des Aufnahmekörpers eine Kupplungsvorrichtung für ein Lastaufnahmeglied des Hebezeuges, diese Kupplungsvorrichtung kann insbesondere auf der Oberseite der Kopfplatte des Aufnahmekörpers angeordnet sein.

In vorteilhafter Weiterbildung der Erfindung sind ferner die Kupplungsvorrichtung des Aufnahmekörpers und das Lastaufnahmeglied des Hebezeugs mittels Formschlußkonturen bei fluchtender Ausrichtung der Kupplungsgegenglieder des Hebezeuges mit den Kupplungsgliedern oberseitig an den Teilbehältern miteinander verriegelbar und bei nichtfluchtender Ausrichtung voneinander lösbar. Man muß also zunächst über die Kupplungsvorrichtung an der Oberseite des Aufnahmekörpers den Sammelbehälter mit dem Hebezeug sicher verbinden, um dann nach dem Anheben durch Betätigung des jeweiligen Kupplungsgegengliedes des Hebezeugs jeden Teilbehälter für sich aufklappen zu können. Dazu hat vorteilhaft die Kupplungsvorrichtung des Aufnahmekörpers einen länglichen Eintauchschlitz mit einer Hinterschneidung und das Lastaufnahmeglied des Hebezeugs einen daran angepaßten, formschlüssig verriegelbaren Hammerkopf, wobei das Hebezeug um eine senkrecht durch den Hammerkopf hindurchgehende Achse drehbar ist. Solange also der Hammerkopf nicht durch Formschluß an der Kupplungsvorrichtung des Aufnahmekörpers gesichert ist, kann die Öffnung der Teilbehälter nicht vorgenommen werden. Eine wirkungsvolle Sicherung besteht darin, daß die Kupplungsvorrichtung des Aufnahmekörpers an ihrer Unterseite im Bereich der Hinterschneidung eine nach unten öffnende Quernut senkrecht zur Längsrichtung des Eintauchschlitzes hat, in die beim Hubvorgang der Hammerkopf des Hebezeuges formschlüssig eingreift. Hierzu erstreckt sich vorteilhafterweise die Hinterschneidung beidseits an der Unterseite der Kupplungsvorrichtung ausgehend von der Längsrichtung des Eintauchschlitzes über einen Drehwinkel für den Hammerkopf des Hebezeuges von 90 Grad und ist durch eine nach unten verlängerte Flanke der Quernut als Anschlag für den Hammerkopf begrenzt.

Eine vorteilhafte Ausbildung der Kupplungsgegenglieder des Hebezeuges besteht in jeweils einer Vertikalebene zwischen einer äußeren, gespreizten Lage sowie einer nach innen zum Lastaufnahmeglied hin eingezogenen Position schwenkbaren Haken, die am Hebezeug um das Lastaufnahmeglied herum im Winkelabstand der Kupplungsglieder oberseitig an den Teilbehältern im wesentlichen nach unten vorstehend angeordnet sind und nach innen zum Lastaufnahmeglied gerichtete HakenvorSprünge haben. Entsprechend sind die Kupplungsglieder oberseitig an den Teilbehältern an die hakenförmigen Kupplungsgegenglieder des Hebezeugs angepaßte Einhakösen.

### KURZBESCHREIBUNG DER ZEICHNUNGSABBILDUNG

Die Erfindung wird nachfolgend anhand der Zeichnung an einem Ausführungsbeispiel noch näher erläutert. Dabei zeigen:
- Fig 1: eine perspektivische Darstellung schräg von oben gesehen eines Sammelbehälters mit einem aufgeklappten Teilbehälter,
- Fig 2: eine perspektivische Darstellung des hälftigen Teilbehälters des Sammelbehälters nach Fig 1,
- Fig 3: eine perspektische Darstellung eines der Viertel-Teilbehälter des Sammelbehälters nach Fig 1,
- Fig 4: eine perspektische Darstellung des zentralen Aufnahmekörpers des Sammelbehälters mit angedeuteten Behälterkonturen,
- Fig 5: eine perspektische Darstellung des Hebezeuges für den Sammelbehälter in Ausrichtung auf die entsprechende Kupplungsvorrichtung an der Oberseite des zentralen Aufnahmekörpers und
- Fig 6: eine der Fig 5 entsprechende Darstellung des Hebezeuges in Eingriffsstellung der Kupplungsgegenglieder mit den Kupplungsgliedern an der Oberseite der Teilbehälter.

### BESTER WEG ZUR AUSFÜHRUNG DER ERFINDUNG

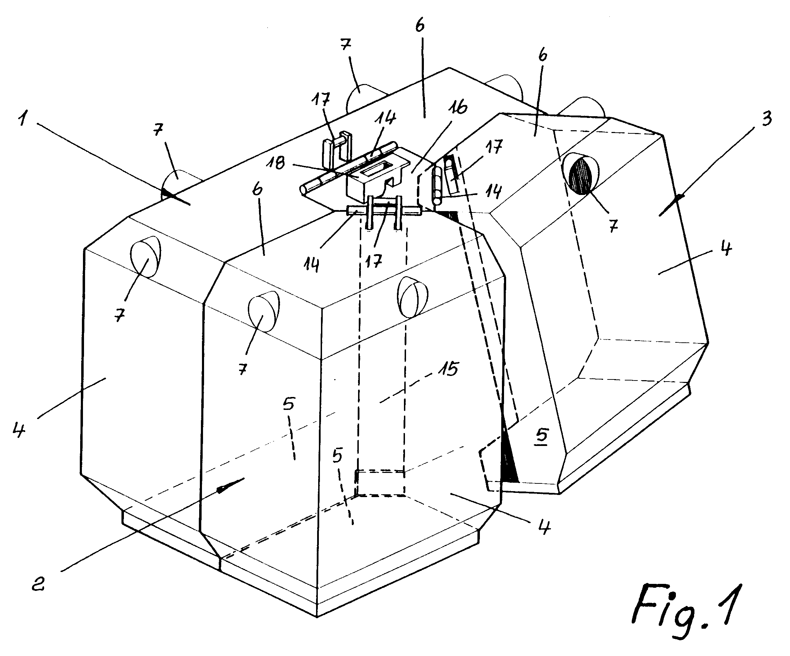

In Fig. 1 erkennt man im einzelnen einen Sammelbehälter, der aus drei sich ergänzenden Teilbehältern 1, 2 und 3 besteht. Insgesamt hat der Sammelbehälter eine im wesentlichen kubische Form, wobei der größere der drei Sammelbehälter, nämlich der Teilbehälter 1, das halbe Volumen des gesamten Sammelbehälters und die beiden kleineren Teilbehälter, nämlich die Teilbehälter 2 und 3, jeweils ein Viertel des Gesamtvolumens einnehmen. Die Trennfugen 22 zwischen den Teilbehältern 1, 2 und 3 sind so angeordnet, daß sie entlang der vertikalen, einander rechtwinklig kreuzenden Mittenebenen des gesamten Sammelbehälters verlaufen, so daß die Teilbehälter 1, 2 und 3 rechtwinklige Querschnittsformen haben. Die Teilbehälter 1, 2 und 3 haben im wesentlichen geschlossene Außenseiten, ihr Inneres ist von außen her lediglich durch oben angeordnete Einwurföffnungen 7 zugänglich. So weisen die Teilbehälter 1, 2 und 3 geschlossene Außenseiten 4, einen durchgehenden Boden 5 und eine geschlossene Oberseite 6 auf. Durch die Einwurföffnungen 7 wird das betreffende Sammelgut, wie insbesondere Altglas getrennt nach farblichen Fraktionen in die Teilbehälter 1, 2 und 3 eingegeben, die Entleerung der Teilbehälter 1, 2 und 3 erfolgt über die Innenseiten, wozu die Teilbehälter 1, 2 und 3 relativ zueinander jeweils unter Bildung eines nach unten offenen Entleerungsspaltes aufgeklappt werden können.

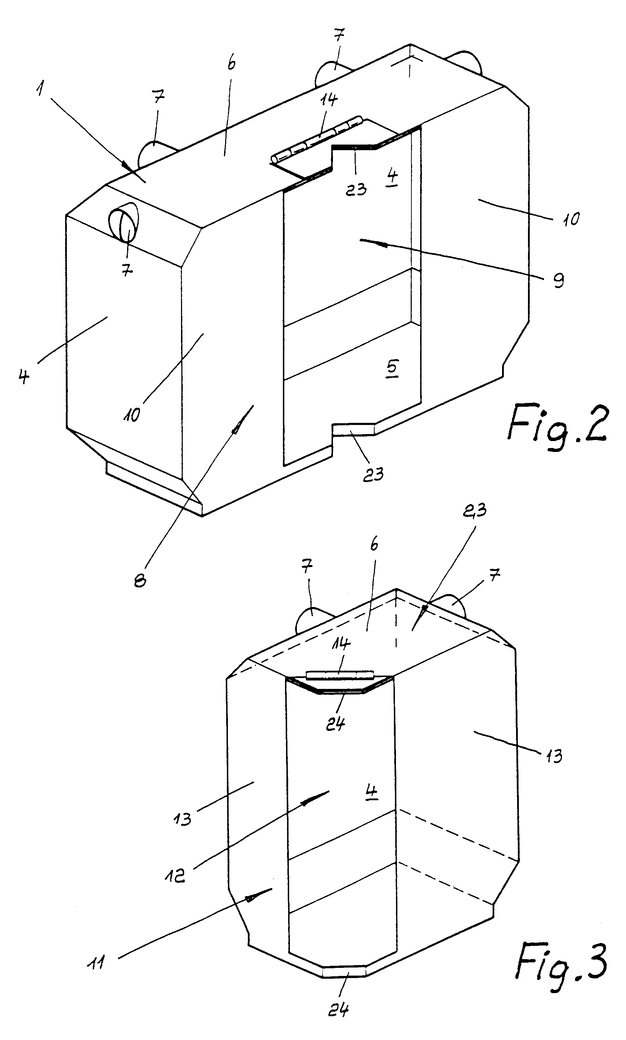

In Fig. 2 ist die innenliegende Offenseite 8 des Teilbehälters 1 erkennbar, die eine mittige Entleerungsöffnung 9 hat, welche durch seitliche Wandteile 10 eingegrenzt ist. Die Offenseite 8 des hälftigen Teilbehälters 1 erstreckt sich über eine Längsseite, wobei durch Vergrößerung oder Verkleinerung der Teilwände 10 die Entleerungsöffnung 9 beliebig groß gestaltet werden kann. Durch eine Neigung des Bodens 5 zur Entleerungsöffnung 9 hin kann ein vollständiges Ausschütten des Sammelgutes aus dem Teilbehälter 1 erzielt werden. Entsprechend zeigt Fig. 3 die innenliegende Offenseite 11 eines der kleineren Teilbehälter 2 oder 3, die hier über die innenliegende Eckkante hinweggeführt ist. Entsprechend findet sich hier eine entlang der Eckkante verlaufende Entleerungsöffnung 12, die von rechtwinklig zueinander stehenden Wandteilen 13 eingegrenzt wird.

In den Figuren 2 und 3 sind jeweils an den Oberseiten 6 der Teilbehälter 1, 2 und 3 nach Art von Scharnieren aufgebaute Gelenke 14 dargestellt, die jeweils von der vertikalen Mittenachse des betreffenden Teilbehälters 1, 2 oder 3 zu der Seite der Entleerungsöffnung 9 bzw. 12 hin versetzt sind. Wie dazu Fig. 1 weiter zeigt, sind über diese Gelenke 14 die Teilbehälter 1, 2 und 3 an einem zentralen Aufnahmekörper 15 aufgehängt, wobei die Achse des Gelenks 14 bei dem hälftigen Teilbehälter 1 parallel zur Längsmittenebene und bei den kleineren Teilbehältern 2 und 3 parallel zur Diagonal mittenebene liegt. Jeder der Teilbehälter 1, 2 und 3 kann somit relativ zu dem zentralen Aufnahmekörper 15 unter Bildung eines nach unten öffnenden Entleerungsspaltes aufgeklappt werden, so wie es in Fig. 1 rechts bei dem hinteren kleinen Teilbehälter 3 gezeigt ist. Die Öffnung der Teilbehälter erfolgt über ein Hebezeug, auf das nachstehend noch eingegangen werden wird.

An seinem Oberende hat der zentrale Aufnahmekörper 15 eine Kopfplatte 16, die relativ zu seiner Längsachse radial vorsteht. An dieser Kopfplatte 16 sind die Teilbehälter 1, 2 und 3 über die oberseitigen Gelenke 14 angelenkt, wobei die außermittige Anordnung bezogen auf die Vertikalmitte jedes einzelnen Teilbehälters 1, 2 und 3 dafür sorgt, daß bei hängender Anordnung die Offenseiten 8 bzw. 11 der Teilbehälter 1, 2 oder 3 unter Schwerkrafteinwirkung selbstätig durch Anlage am zentralen Aufnahmekörper 15 geschlossen sind. Zum Aufklappen der Teilbehälter 1, 2 und 3 muß eine der Schließkraft entgegenwirkende Zugkraft aufgebracht werden, die an Kupplungsgliedern 17 an den Oberseiten 6 der Teilbehälter 1, 2 und 3 anzugreifen hat, welche auf derjenigen Seite des jeweiligen Gelenks 14 angeordnet sind, die von dem zentralen Aufnahmekörper 15 bzw. von dessen oberseitiger Kopfplatte 16 abliegt. Zum Ansetzen des Hebezeuges am Aufnahmekörper 15 dient eine Kupplungsvorrichtung 18, die auf der Oberseite der Kopfplatte 16 des Aufnahmekörpers 15 angeordnet ist.

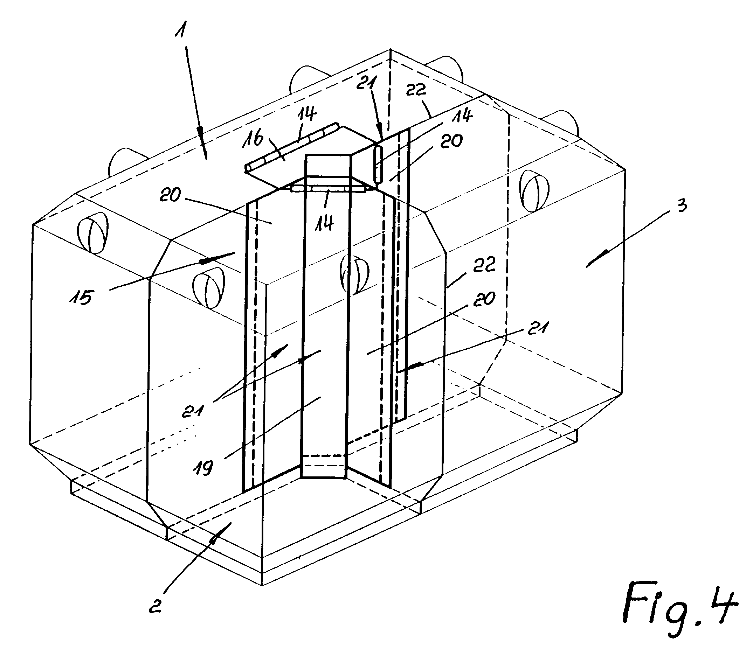

Die besondere Ausgestaltung des Aufnahmekörpers 15 ist in Fig. 4 zu erkennen. Er weist eine über die gesamte Höhe der Teilbehälter 1, 2 und 3 reichende, zentrale Vierkant-Säule 19 auf, an der entsprechend dem Verlauf der Trennfugen 22 zwischen den Teilbehältern 1, 2 und 3 radial vorstehende Wandungsflügel 20 angeordnet sind. Diese Wandungsflügel 20 bilden zusammen mit den Außenseiten der zentralen Säule 19 des Aufnahmekörpers 15 Wandabschnitte 21, welche in der Schließlage der Teilbehälter 1, 2 und 3 deren Entleerungsöffnungen 9, 12 an den Offenseiten 8, 11 vollständig überdecken. Dabei überlappen die Wandungsflügel 20 die die Entleerungsöffnungen 9, 12 seitlich eingrenzenden Wandteile 10, 13 der Teilbehälter 1, 2, 3. Die Vierkant-Säule 19 des Aufnahmekörpers 15 wird von den Oberseiten 6 und den Bodenseiten 5 der Teilbehälter 1, 2 und 3 in der Schließlage dicht umschlossen, dazu sind in die Oberseite 6 und die Unterseite 5 des hälftigen Teilbehälters 1 entsprechend V-förmige Negativkonturen 23 eingeformt und finden sich an den Innenecken der Bodenseiten 5 und der Oberseiten 6 der kleineren Teilbehälter 2 und 3 Abschrägungen als entsprechende Negativkontur 24.

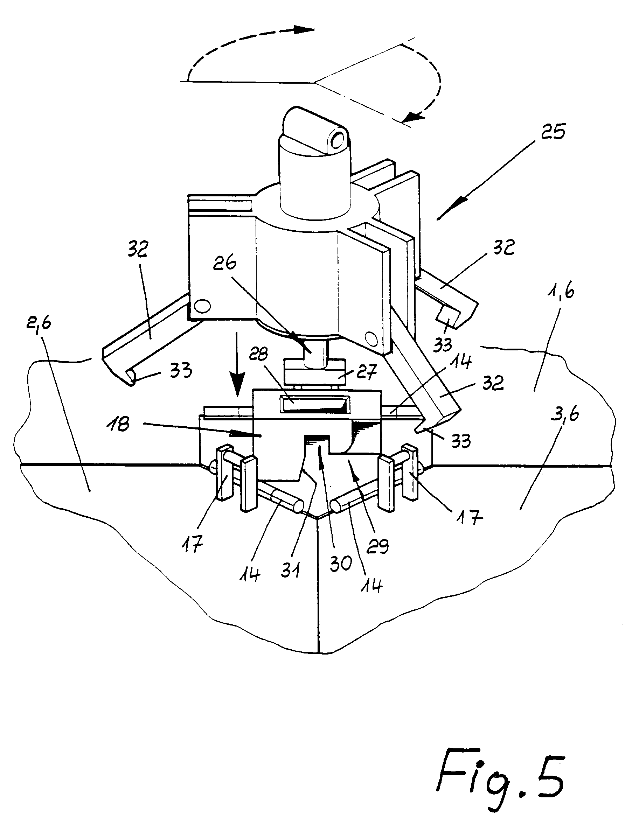

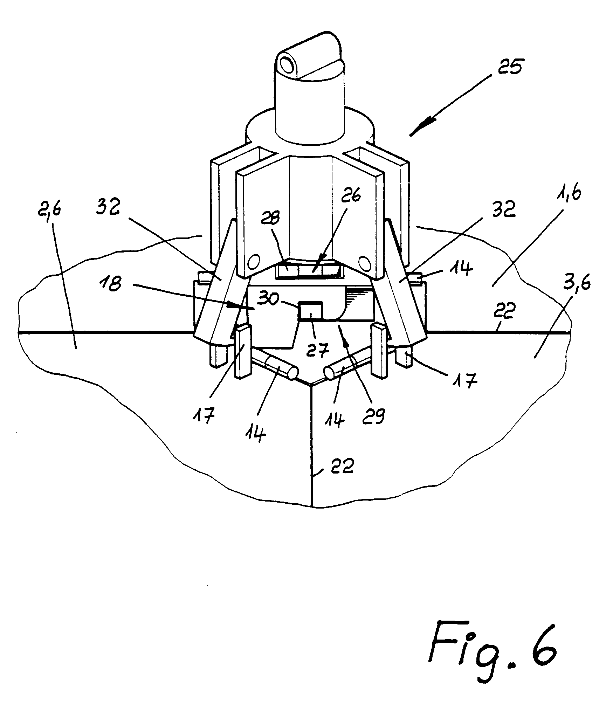

Das an die Kupplungsvorrichtung 18 des Aufnahmekörpers 15 ankuppelbare Hebezeug 25 erkennt man in einzelnen in den Figuren 5 und 6. An seinem Unterende hat das Hebezeug 25 ein koaxial nach unten vorstehendes Lastaufnahmeglied 26, welches an seinem Unterende als Hammerkopf 27 ausgebildet ist. Entsprechend ist die Kupplungsvorrichtung 18 des Aufnahmekörpers 15 mit einem länglichen Eintauchschlitz 28 ausgestattet, der nach unten hin in eine Frei- oder Hinterschneidung 29 mündet, in deren Bereich der Hammerkopf 27 des Lastaufnahmegliedes 26 bis in eine zum Eintauchschlitz 28 senkrechte Position gedreht werden kann. Der Eintauchschlitz 28 ist zumindest in seiner Längsrichtung konturengenau an den Hammerkopf 27 des Lastaufnahmegliedes 26 angepaßt, damit das Hebezeug 25 eine bestimmte Drehstellung beim Durchtauchen des Hammerkopfes 27 durch den Eintauchschlitz 28 hindurch einnimmt. Die Kupplungsvorrichtung 18 hat an ihrer Unterseite eine den Eintauchschlitz 28 mittig kreuzende Quernut 30, die zu der Hinterschneidung 29 hin öffnet. Diese Quernut 30 nimmt den Hammerkopf 27 dann auf, wenn er mit dem gesamten Hebezeug 25 nach Durchtauchen des Eintauchschlitzes 28 um 90° gedreht und anschließend das Hebezeug 25 angehoben wird. Dadurch ist das Hebezeug 25 an der Kupplungsvorrichtung 18 des Aufnahmekörpers 15 verriegelt, wie Fig. 6 zu entnehmen ist. Damit der Hammerkopf 27 beim Hebevorgang sicher in die Quernut 30 an der Unterseite der Kupplungsvorrichtung 18 eingeführt werden kann, ist an der der Hinterschneidung 29 gegenüberliegenden Seite die Flanke 31 der Quernut 30 nach unten hin verlängert, um einen Anschlag für den Hammerkopf 27 zu bilden. Da der Hammerkopf 27 relativ zur vertikalen Rotationsachse des Hebezeugs 25 beidseits Überstände hat, ist entsprechend die Kupplungsvorrichtung 28 an ihrer Unterseite beidseitig mit einander drehsymmetrisch gegenüberliegenden Freischneidungen ausgebildet.

Um das zentrale Aufnahmeglied 26 herum sind an dem Hebezeug 25 Kupplungsgegenglieder 32 schwenkbar gelagert, deren Winkelabstand dem Winkelabstand der Kupplungsglieder 17 an den Oberseiten 6 der Teilbehälter 1, 2 und 3 entspricht. Bei den Kupplungsgegengliedern 32 handelt es sich um Haken, die im wesentlichen nach unten vorstehend an dem Hebezeug 25 angeordnet sind und eine schräg nach außen gespreizte Position, die in Fig. 5 Wiedergegeben ist, sowie eine nach innen eingeschwenkte Lage einnehmen können, welche Fig. 6 zeigt. An ihren Innenseiten zum Lastaufnahmeglied 26 hin sind die Kupplungsgegenglieder 32 mit Hakenvorsprüngen 33 versehen, die in der nach innen eingefahrenen Lage in Eingriff mit dem jeweiligen, nach Art einer Einhaköse gestalteten Kupplungsglied 17 oberseitig an dem betreffenden Teilbehälter 1, 2 oder 3 stehen. Jedes der Kupplungsgegenglieder 32 des Hebezeuges 25 kann durch einen nicht gezeichneten Antrieb von der äußeren gespreizten Position in die innere Lage bewegt werden, wobei dann unter Mitnahme des Kupplungsgliedes 17 der betreffende Teilbehälter 1, 2 oder 3 um sein oberseitiges Gelenk 14 mit seiner Bodenseite 5 von dem zentralen Aufnahmeglied 15 weg geschwenkt wird. Fig. 6 zeigt zwar die beiden sichtbaren Kupplungsgegenglieder 32 des Hebezeugs 25 in Eingriff mit den Kupplungsgliedern 17 der beiden Teilbehälter 2 und 3, es versteht sich jedoch, daß in der Regel, also beim Entleerungsvorgang, jeder der Teilbehälter 1, 2 oder 3 für sich über eine entsprechende Steuerung des Kupplungsgegengliedes 32 am Hebezeug 25 geöffnet werden kann.

## Patentansprüche

1. Sammelbehälter für wiederverwertbare Abfallstoffe, wie insbesondere Altglas, bestehend aus Teilbehältern (1,2,3), die mit Ausnahme von oberen Einwurföffnungen (7) geschlossene Außen-, Ober- und Unterseiten (4,5,6) und eine zumindest einem anderen Teilbehälter in der Schließlage zugewandte innere Offenseite (8,11) haben und die an ihren Oberseiten (6) sie miteinander verbindende Gelenke (14) sowie im Abstand jeweils von der Gelenkachse zu der dem anderen Teilbehälter abgelegenen Seite hin Kupplungsglieder (17) fur ein Hebezeug mit Kupplungsgegengliedern aufweisen, über die sie mit ihrer inneren Offenseite von dem anderen Teilbehälter weg unter Bildung eines nach unten öffnenden Entleerungsspaltes aufschwenkbar sind,
dadurch gekennzeichnet,
daß die Teilbehälter (1,2,3) mit ihren oberseitigen Gelenken (14) an einem zentralen Aufnahmekörper (15) angeordnet sind, der die inneren Offenseiten (8,11) der Teilbehälter (1,2,3) in deren jeweiliger Schliellage verschließende Wandabschnitte (21) hat.

2. Sammelbehälter nach Anspruch 1,
dadurch gekennzeichnet,
daß er insgesamt eine im wesentlichen kubische Gestalt hat und drei oder vier Teilbehälter (1,2,3) aufweist, deren Trennfugen (22) in der Schließlage in der Längs-und Quermittenebene des im wesentlichen kubischen Grundkörpers verlaufen, wobei der Aufnahmekörper (15) an der Kreuzung der Trennfugen (22) angeordnet ist.

3. Sammelbehälter nach Anspruch 2.
dadurch gekennzeichnet,
daß die Achsen der Gelenke (14) zwischen den Oberseiten (6) der Teilbehälter (1,2,3) und dem Aufnahmekörper (15) parallel und/oder diagonal zu den Trennfugen (22) sowie außerhalb der Vertikalmitte des betreffenden Teilbehälters (1, 2, 3) zum zentralen Aufnahmekörper (15) hin angeordnet sind.

4. Sammelbehälter nach Anspruch 3,
dadurch gekennzeichnet,
daß die Offenseite (11) der Teilbehälter (2,3) sich bei diagonaler Anordnung der Achsen der Gelenke (14) über die innere Eckkante des jeweiligen Teilbehälters (2,3) hinweg erstreckt.

5. Sammelbehälter nach einem der Ansprüche 1 - 4,
dadurch gekennzeichnet,
daß der Aufnahmekörper (15) eine zentrale Säule (19) hat, an der Wandungsflügel (20) radial vorstehen, die zumindest einen Teil der die Offenseiten (8,11) der Teilbehälter (1,2,3) verschließenden Wandabschnitte (21) bilden.

6. Sammelbehälter nach Anspruch 5,
dadurch gekennzeichnet,
daß die Säule (19) des Aufnahmekörpers (15) sich über die gesamte Höhe der Teilbehälter (1,2,3) erstreckt, in deren Oberseiten (6) und Unterseiten (5) Negativkonturen (23, 24) zur dichten Umschließung der Säule (19) eingeformt sind.

7. Sammelbehälter nach einem der Ansprüche 1 - 6,
dadurch gekennzeichnet,
daß an der Offenseite (8,11) der Teilbehälter (1,2,3) die Entleerungsöffnungen (9,12) seitlich eingrenzende Wand teile (10,13) angeordnet sind, die in der Schließlage von den Wandabschnitten (21) bzw. den Wandungsflügeln (20) des Aufnahmekörpers (15) überlappt werden.

8. Sammelbehälter nach einem der Ansprüche 5 - 7,
dadurch gekennzeichnet,
daß der Aufnahmekörper (15) eine am Oberende seiner Säule (19) darüber radial vorstehende Kopfplatte (16) hat, entlang deren Ränder die Gelenke (14) für die Teilbehälter (1,2,3) angeordnet sind.

9. Sammelbehälter nach einem der Ansprüche 1 - 8,
dadurch gekennzeichnet,
daß am Oberende des Aufnahmekörpers (15) eine Kupplungsvorrichtung (18) für ein Lastaufnahmeglied (26) des Hebezeugs (25) angeordnet ist.

10. Sammelbehälter nach Anspruch 9,
dadurch gekennzeichnet,
daß die Kupplungsvorrichtung (18) auf der Oberseite der Kopfplatte (16) des Aufnahmekörpers (15) angeordnet ist.

11. Sammelbehälter nach Anspruch 9 oder 10,
dadurch gekennzeichnet,
daß die Kupplungsvorrichtung (18) des Aufnahmekörpers (15) und das Lastaufnahmeglied (26) des Hebezeugs (25) mittels Formschlußkonturen bei fluchtender Ausrichtung der Kupplungsgegenglieder (32) des Hebezeugs (25) mit den Kupplungsgliedern (17) oberseitig an den Teilbehältern (1,2,3) miteinander verriegelbar und bei nicht fluchtender Ausrichtung voneinander lösbar sind.

12. Sammelbehälter nach Anspruch 11,
dadurch gekennzeichnet,
daß die Kupplungsvorrichtung (18) des Aufnahmekörpers (15) einen länglichen Eintauchschlitz (28) mit einer Hinterschneidung (29) und das Lastaufnahmeglied (26) einen daran angepaßten, formschlüssig verriegelbaren Hammerkopf (27) hat, wobei das Hebezeug (25) um eine senkrecht durch den Hammerkopf (27) hindurchgehende Achse drehbar ist.

13. Sammelbehälter nach Anspruch 12,
dadurch gekennzeichnet,
daß die Kupplungsvorrichtung (18) des Aufnahmekörpers (15) an ihrer Unterseite im Bereich der Hinterschneidung (29) eine nach unten öffnende Quernut (30) senkrecht zur Längsrichtung des Eintauchschlitzes (28) hat.

14. Sammelbehälter nach Anspruch 13,
dadurch gekennzeichnet,
daß die Hinterschneidung (29) beidseits an der Unterseite der Kupplungsvorrichtung (18) sich ausgehend von der Längsrichtung des Eintauchschlitzes (28) über einen Drehwinkel für den Hammerkopf (27) des Hebezeuges (25) von 90 Grad erstreckt und durch eine nach unten verlängerte Flanke (31) der Quernut (30) als Anschlag für den Hammerkopf (27) begrenzt ist.

15. Sammelbehälter nach einem der Ansprüche 11 - 14,
dadurch gekennzeichnet,
daß die Kupplungsgegenglieder (32) des Hebezeugs (25) in jeweils einer Vertikalebene zwischen einer äußeren, gespreizten Lage sowie einer nach innen zum Lastaufnahmeglied (26) hin eingezogenen Position schwenkbare Haken sind, die am Hebezeug (25) um das Lastaufnahmeglied (27) herum im Winkelabstand der Kupplungsglieder (17) oberseitig an den Teilbehältern (1,2,3) im wesentlichen nach unten vorstehend angeordnet sind und nach innen zum Lastaufnahmeglied (17) hin gerichtete Hakenvorsprünge (33) haben.

16. Sammelbehälter nach Anspruch 15,
dadurch gekennzeichnet,
daß die Kuppluhgsglieder (17) oberseitig an den Teilbehältern (1,2,3) an die hakenförmigen Kupplungsgegenglieder (32) des Hebezeugs (25) angepaßte Einhakösen sind.

## Claims

1. A collecting vessel for reusable waste materials, such as in particular old glass, comprising sub vessels (1,2,3), which with the exception of the top inlet orifices (7) have enclosed outer, top and bottom faces (4,5,6) and at least one inner open face (8,11) facing in the closed position another sub vessel and which have linkages (14) connecting them together on their top faces (6) as well as coupling links (17) for lifting gear equipped with cooperating coupling links spaced at a distance in each case facing away from the linkage axes towards the hinged face of the other sub vessel, via which they can be pivoted open with their inner open face pivoted away from the other sub vessel in forming an emptying gap open at the bottom,
characterised in that the sub vessels (1,2,3) are arranged by their top face linkages (14) to a central receiving body (15), which has wall sections (21) sealing the inner open faces (8, 11) of the sub vessels (1,2,3) in their respective closed position.

2. A collecting vessel according to claim 1,
characterised in that it generally has a substantially cubic form and features three or four sub vessels (1,2,3) the separation joints (22) of which run in the longitudinal and transverse plane of the substantially cubic main body in the closed position, so that the receiving body (15) at the intersection of the separation joints (22) is arranged.

3. A collecting vessel according to claim 2,
characterised in that the axes of the linkages (14) between the top faces (6) of the sub vessels (1,2,3) and the receiving body (15) are arranged parallel and/or diagonal to the separation joints (22) and are arranged outside the vertical centre of the respective sub vessel (1,2,3) facing towards the central receiving body (15).

4. A collecting vessel according to claim 3,
characterised in that the open face (11) of the sub vessel (2,3) extends over the inner corner edge of the respective sub vessel (2,3) for the diagonal arrangement of the axes of the linkages (14).

5. A collecting vessel according to any of the claims 1 to 4,
characterised in that the receiving body (15) has a central column (19), from which partitioning fins (20) project radially, which form at least one part of the wall sections (21) sealing the open faces (8,11) of the sub vessel (1,2,3).

6. A collecting vessel according to claim 5,
characterised in that the column (19) of the receiving body (15) extends over the entire height of the sub vessels (1,2,3) in the top face (6) and the bottom face (5) of which negative contours (23,24) are impressed for encasement sealing of the column (19).

7. A collecting vessel according to any of the claims 1 to 6,
characterised in that on the open faces (8,11) of the sub vessels (1,2,3) the emptying orifices (9, 12) are arranged against laterally demarcating wall partitions (10, 13), which are overlapped by the wall partitions (21) or the partitioning fins (20) of the receiving body in the closed position.

8. A collecting vessel according to any of the claims 5 to 7,
characterised in that the receiving body (15) has a head plate (16) at the top end of its column (19) projecting radially thereover, along the edges of which the linkages (14) are arranged for the sub vessels (1,2,3).

9. A collecting vessel according to any of the claims 1 to 8,
characterised in that on the top end of the receiving body (15) is arranged a coupling device (18) for a load carrying link (26) of the lifting gear (25).

10. A collecting vessel according to claim 9,
characterised in that the coupling device (18) is arranged on the top face of the head plate (16) of the receiving body (15).

11. A collecting vessel according to claim 9 or 10,
characterised in that the coupling device (18) of the receiving body (15) and the load carrying link (26) of the lifting gear (25) can interlock with the coupling links (17) on the top face of the sub vessels (1,2,3) by means of form interlocking contours during engagement of the cooperating coupling links (32) of the lifting gear (25) and can detach from each other during disengagement.

12. A collecting vessel according to claim 11,
characterised in that the coupling device (18) of the receiving body (15) has a long engagement slot (28) having an undercut (29) and the load carrying link (26) has a matching form engaging interlockable hammer head (27), whereby the lifting gear (25) is rotatable around a vertical axis passing through the hammer head (27).

13. A collecting vessel according to claim 12,
characterised in that the coupling device (18) of the receiving head (15) on its underside in the region of the undercut has an open underside transverse groove (30) vertical to the longitudinal direction of the engagement slot (28).

14. A collecting vessel according to claim 13,
characterised in that the undercut (29) extends at both ends on the underside of the coupling device (18) from the longitudinal direction of the engagement slot (28) over an angle of rotation for the hammer head (27) of the lifting gear (25) by 90° and is restricted by a downwards extending flank (31) of the transverse groove (30) as a stop for the hammer head (27).

15. A collecting vessel according to any of the claims 11 to 14,
characterised in that the counter coupling links (32) of the lifting gear (25) are in a vertical plane in each case between an outer spread position and a position drawn in towards the load carrying link (26) of pivotal hooks, which are fitted on the lifting gear (25) around the load carrying link (27) at the angular pitch of the coupling links (17) on the top face of the sub vessels (1,2,3) for projecting essentially downwards and having hook projections facing away in towards the load carrying link (17).

16. A collecting vessel according to claim 15,
characterised in that the coupling links (17) are hook eyelets on the top face of the sub vessels (1,2,3) matched to the hook shaped counter coupling link (32) of the lifting gear (25).

## Revendications

1. Conteneur pour déchets recyclables, tout particulièrement pour produits recyclables en verre, composé de deux conteneurs partiels (1, 2, 3) et pré-sentant des côtés extérieurs, supérieurs et inférieurs (4, 5, 6) fermés, à l'exception des ouvertures supérieures de remplissage (7), et un côté ouvert, intérieur (8, 11), qui, à l'état fermé, est dirigé au moins vers un autre conteneur partiel, les côtés supérieurs des deux conteneurs partiels étant reliés l'un à l'autre à l'aide d'articulations (14) et présentant, à distance de l'axe de pivotement respectif, du côté opposé à l'autre conteneur partiel, des éléments d'accouplement (17) pour un dispositif de levage pourvu de contre-éléments d'accouplemeht, à l'aide desquels ils peuvent être basculés de sorte que leur côté intérieur ouvert soit dirigé à l'opposé de l'autre conteneur partiel en formant une fente de vidange qui s'ouvre vers le bas,
caractérisé en ce que
les conteneurs partiels (1, 2, 3) sont disposés, avec leurs articulations supérieures (14), contre un corps de réception central (15) pourvu de sections de parois (21) qui, dans leur position de fermeture respective, ferment les côtés intérieurs, ouverts (8, 11) des conteneurs partiels (1, 2, 3).

2. Conteneur selon la revendication 1,
caractérisé en ce que
celui-ci présente une forme générale essentiellement cubique et trois ou quatre conteneurs partiels (1, 2, 3), dont les joints (22) à l'état fermé, s'étendent sur un plan longitudinal et un plan central transversal du corps de base essentiellement cubique, le corps de réception (15) étant disposé au croisement des joints (22).

3. Conteneur selon la revendication 2,
caractérisé en ce que
les axes des articulations (14) sont disposés entre les côtés supérieurs (6) des conteneurs partiels (1, 2, 3) et le corps de réception (15), parallèlement et/ou en diagonale par rapport aux joints (22), ainsi qu'en dehors du centre vertical du conteneur partiel (1, 2, 3) concerné, en direction du corps de réception central (15).

4. Conteneur selon la revendication 3,
caractérisé en ce que
le côté ouvert (11) des conteneurs partiels (2, 3) s'étend au-delà du bord angulaire, intérieur du conteneur partiel en question (2, 3) en cas de disposition diagonale des axes des articulations (14).

5. Conteneur selon l'une des revendications 1 à 4,
caractérisé en ce que
le corps de réception (15) possède une colonne centrale (19) sur laquelle des ailes (20) sont prévues en saillie radiale et forment au moins une partie des sections de parois (21) fermant les côtés ouverts (8, 11) des conteneurs partiels (1, 2, 3).

6. Conteneur selon la revendication 5,
caractérisé en ce que
la colonne (19) du corps de réception (15) s'étend sur toute la hauteur des conteneurs partiels (1, 2, 3), dans les côtés supérieurs (6) et les côtés inférieurs (5) desquels des contours négatifs (23, 24) sont formés en vue d'entourer la colonne (19) de façon étanche.

7. Conteneur selon l'une des revendications 1 à 6,
caractérisé en ce que
les parties de parois (10, 13), limitant latéralement les ouvertures de vidange (9, 12), sont disposées sur le côté ouvert (8, 11) des conteneurs partiels (1, 2, 3) et sont chevauchées, à l'état fermé, par les sections de parois (21) resp. les ailes (20) du corps de réception.

8. Conteneur selon l'une des revendications 5 à 7,
caractérisé en ce que
le corps de réception (15) est pourvu, en saillie radiale sur l'extrémité supérieure de sa colonne (19), d'une plaque (16) le long des bords de laquelle les articulations (14) des conteneurs partiels (1, 2, 3) sont disposées.

9. Conteneur selon l'une des revendications 1 à 8,
caractérisé en ce que
un dispositif d'accouplement (18) pour un élément de suspension de la charge (26) du dispositif de levage (25) est disposé à l'extrémité supérieure du corps de réception (15).

10. Conteneur selon le revendication 9,
caractérisé en ce que
le dispositif d'accouplement (18) est disposé sur le côté supérieur de la plaque (16) du corps de réception (15).

11. Conteneur selon la revendication 9 ou 10,
caractérisé en ce que
le dispositif d'accouplement (18) du corps de réception (15) et l'élément de suspension de la charge (26) du dispositif de levage (25) peuvent être verrouillés ensemble, à la partie supérieure des conteneurs partiels (1, 2, 3) à l'aide de contours à engagement positif, lorsque les contre-éléments d'accouplement (32) du dispositif de levage (25) et les éléments d'accouplement (17) sont en alignement et et déverrouillés lorsque ceux-ci sont désalignés.

12. Conteneur selon la revendication 11,
caractérisé en ce que
le dispositif d'accouplement (18) du corps de réception (15) est pourvu d'une fente d'insertion longitudinale (28) avec une contre-dépouille (29) et que l'élément de suspension de la charge (26) présente un mouton (27) adapté et verrouillable par engagement positif, le dispositif de levage (25) pouvant pivoter autour d'un axe qui traverse verticalement le mouton (27).

13. Conteneur selon la revendication 12,
caractérisé en ce que
le dispositif d'accouplement (18) du corps de reception (15) présente, sur son côté inférieur, dans la zone contre-dépouillée (29), une rainure transversale (30) qui s'ouvre vers le bas et est disposée perpendiculairement par rapport au sens longitudinal de la fente d'insertion (28).

14. Conteneur selon la revendication 13,
caractérisé en ce que
la contre-dépouille (29) s'étend des deux côtés de la partie inférieure du dispositif d'accouplement (18), en partant du sens longitudinal de la fente d'insertion (28), sur un angle d'orientation du mouton (27) du dispositif de levage (25) de 90 degrés et est limitée par un flanc (31) de la rainure transversale (39), prolongé vers le bas et servant de butée pour le mouton (27).

15. Conteneur selon l'une des revendication 11 à 14,
caractérisé en ce que
les éléments d'accouplement (32) du dispositif de levage (25) sont des crochets pouvant être basculés, sur un plan vertical respectif, d'une position écartée, extérieure à une position rétractée intérieure, en direction de l'élément de suspension de la charge (26), ces crochets étant disposés sur le dispositif de levage (25), autour de l'élément de suspension de la charge (27), à intervale angulaire des éléments d'accouplement (17), à la partie supérieure des conteneurs partiels (1, 2, 3) en formant essentiellement saillie vers le bas et sont équipés de saillies (33) dirigées vers l'intérieur en direction de l'élément de suspension de la charge (17).

16. Conteneur selon la revendication 15,
caractérisé en ce que les éléments d'accouplement (17), équipant la partie supérieure des conteneurs partiels (1, 2, 3) sont des oeillets d'accrochage adaptés aux contre-éléments d' accouplement (32), en forme de crochets, du dispositif de levage (25).
